Europäisches Patentamt

European Patent Office

Office européen des brevets

(19)

(11) Publication number: **0 025 627**
**B1**

(12) **EUROPEAN PATENT SPECIFICATION**

(45) Date of publication of patent specification: **17.08.83**

(51) Int. Cl.³: **C 13 L 1/02**

(21) Application number: **80200841.7**

(22) Date of filing: **08.09.80**

(54) **Method and device for grinding or rasping to pulp tubers, roots, fruit, seeds and similar agricultural produce.**

(30) Priority: **10.09.79 NL 7906735**

(43) Date of publication of application:
**25.03.81 Bulletin 81/12**

(45) Publication of the grant of the patent:
**17.08.83 Bulletin 83/33**

(84) Designated Contracting States:
**AT DE FR NL SE**

(56) References cited:
**US - A - 2 583 697**
**US - A - 3 399 838**

(73) Proprietor: **Nivoba B.V.**
**Industrieweg 1**
**NL-9641 HM Veendam (NL)**

(72) Inventor: **Holthuis, Johannes Jacobus**
**No. 15, Julianalaan**
**Veendam (NL)**
Inventor: **Kerkhoven, Pieter Hendrik**
**No. 25, Berkenlaan**
**Meeden (NL)**

(74) Representative: **Schumann, Bernard Herman Johan et al,**
**OCTROOIBUREAU ARNOLD & SIEDSMA**
**Sweelinckplein 1**
**NL-2517 GK The Hague (NL)**

Courier Press, Leamington Spa, England

## Method and device for grinding or rasping to pulp tubers, roots, fruit, seeds and similar agricultural produce

The invention relates to a method of grinding or rasping to pulp tubers, roots, fruit, seeds and similar agricultural produce.

Such a method is generally known and is employed in starch industry, for example, for rasping potatoes in order to extract therefrom starch, protein and various other products. During the grinding or rasping operation oxydation and hence discolouring of various products occur, which discolouring is undesirable in the final products. In order to avoid this discolouring it is common practice to add reducing agents such as $SO_2$ and sulfites in an early stage of the process.

US—A—2 583 697 describes a process of comminuting food products. In this process the food products are treated with liquified nitrogen whereby the temperature of the products fall far below $0°C$. In this state the products are very brittle and can easily be ground. An extra advantage of this process is, that by saturation with evaporating nitrogen, no oxygen can get access to the products and therefore no oxidation will occur. For employing this known process vast amounts of liquid nitrogen are necessary which makes the product dear.

The invention provides a method in which said disadvantages are avoided in that the products, between which the spaces are not filled with liquid, are ground or rasped in environments free of oxygen or of poor oxygen content. Though from the prior art it is in principle possible to fill the interstices between the products to be ground with liquid in order to supplant the oxygen, this is a bad practice, since then a considerably larger amount of process water has to be worked, the soluble substances released during grinding or rasping are drastically diluted and the effect of the grinding or rasping treatment is considerably reduced or the energy consumption increases markedly.

In a preferred embodiment the products are ground or rasped in vacuo, which has the additional advantage that the volume of the resultant pulp is limited, since the absorption of gas is avoided. Therefore, the bulk of the system for further processing the pulp may be reduced. Since the presence of gases in the pulp is inconvenient in various treatments, it is an additional advantage that no supplementary treatment or apparatus is required for eliminating such disadvantages.

If the presence of gas in the resultant pulp is not troublesome, the vacuum method may be replaced by grinding or rasping in an inert gas atmosphere. As an inert gas air may be used in many cases, from which oxygen is removed.

Since various agricultural products include oxygen, which may be disturbing during the process, it is desirable in these cases to add a small amount of reducing gas to the inert gas so that grinding or rasping is performed in a reducing gas atmosphere.

If during the further processing of the pulp the occluded gas has no disturbing effect and if this gas is cheap, separation of gas from the pulp may be omitted. Otherwise it is advisable to separate the gas conducted away with the ground product from the pulp and to feed this gas back to the space where grinding or rasping is performed.

The invention furthermore relates to a device for carrying out the method described above, said device comprising a grinding or rasping equipment, a feeding device for the products to be ground or rasped and a delivery device for the ground pulp. Such a device, which is known per se, is modified for carrying out the method in accordance with the invention in a manner such that the grinding or rasping equipment comprises a gastight housing, through the wall of which the conduits of the feeding and delivery devices are passed and that the feeding device is provided with a sluice preventing oxygen from entering.

In order to permit of carrying out the method in vacuo, the housing is preferably resistant to internal vacuum, the feeding and delivery devices are produced with vacuum sluices and the housing is provided with a vacuum connection.

Since the products are usually washed with water prior to grinding or rasping, the oxygen-retaining sluice in a preferred embodiment is formed by a fluid trap having transport means for passing products to be ground across it to above the grinding or rasping device. Such a trap is cheap, can be easily maintained and can usually be simply arranged as a modifier on existing equipment.

In the embodiment having a vacuum chamber the fluid trap forming a vacuum sluice and at the same time an oxygen-barring member is preferably provided with a water-filled riser of about 10 ml high. This riser constitutes a part of the feeding device for the products to be ground or rasped. This embodiment is interesting, since in many cases the products to be ground are conveyed by an elevator from the washing device to the grinding or rasping device arranged at a high level in the factory.

In a highly reliable embodiment requiring little maintenance and having a low energy consumption the feeding device comprises a U-shaped tube having a short limb and a long limb, the long limb corresponding to the hydrostatic height opening out in a separation chamber having a sloping sieve bottom allowing only fluid to pass and communicating with an outlet conduit leading to the grinding or rasping device, beneath which chamber is arranged a fluid collecting bottom provided with a downcomer including a pump, said down-comer opening out in the open, short limb of the U-shaped tube. This short limb of the U-shaped tube serves to receive the products to be ground, for which purpose a feeding funnel may be arranged above the open end of the short limb.

In order to avoid potential clogging of the short limb the down-comer preferably opens out near the open end of the short limb.

During the passage of products to be ground through the feeding device a given amount of water will be gradually carried along by the products. In order to supplement a corresponding amount of water in a simple manner there may be arranged beneath the sieve bottom passing the fluid a scanner, which is adjustable in a direction of height for monitoring the fluid and which is coupled with a closing member in a supply conduit opening out in the fluid trap. For the reasons mentioned above the fluid supply conduit preferably opens out near the open end of the short limb.

If it is desired to operate in an atmosphere of an inert gas or a reducing gas, the housing is provided with a supply conduit for said gas. This supply conduit may be connected either with an inert or reducing gas producing device or with a stock thereof or with a gas separator arranged in the delivery device. The latter form is preferred, since in this case the volume of the pulp to be processed as well as the consumption of gas are reduced because the gas is recycled.

The invention will be described more fully with reference to a schematic drawing, in which

Fig. 1 is a schematic, vertical sectional view of a device for rasping in vacuo,

Fig. 2 is a schematic, vertical sectional view of a device for rasping in an inert gas atmosphere,

Fig. 3 is a schematic, vertical sectional view of a device in which the inert gas is recycled and

Fig. 4 shows a preferred embodiment of a device for rasping in vacuo in a schematic, vertical sectional view.

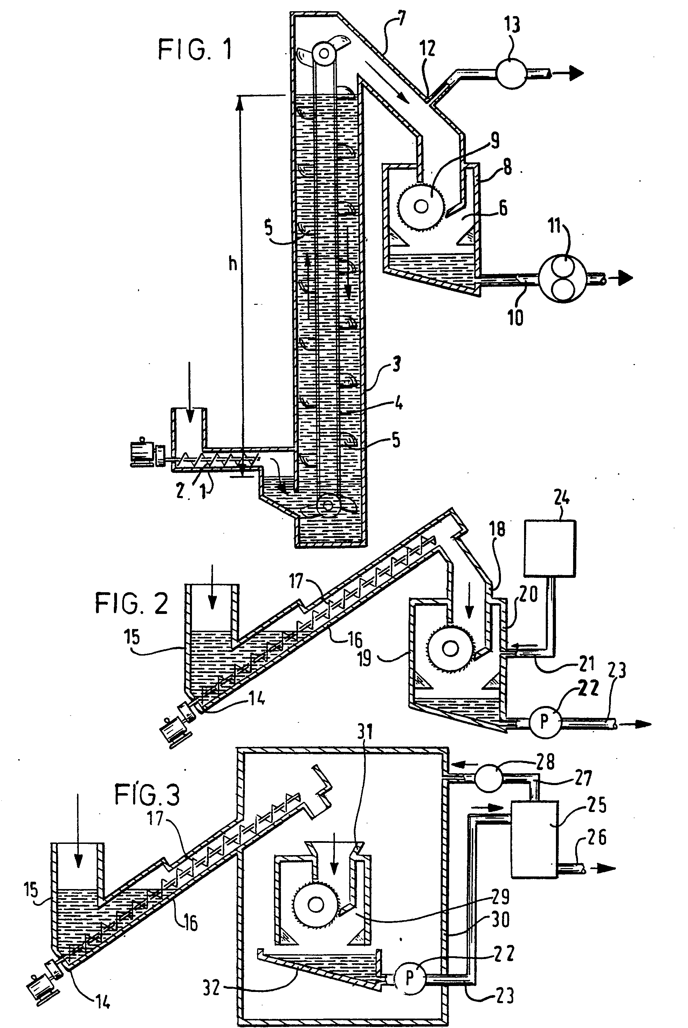

Fig. 1 shows schematically a device for rasping in vacuo agricultural products. The products to be rasped, for example, potatoes are supplied by means of a worm conveyor 2 operating in a conduit 1 to the bottom end of a water-filled riser 3. In said riser an elevator 4 having perforated scoops 5 conveys the products across the water to above the manometric rising height of the water and sheds these products into a closed chute 7 leading to a rasping device 6.

The rasping device 6 comprises a gastight housing 8 resistant to internal vacuum, in which a rasp rotor 9 is adapted to rotate. With the bottom side of the housing communicates a delivery device for the rasped pulp comprising a conduit 10 and a pump 11 included therein, which can conduct away the pulp against the atmospheric pressure and serves, in addition, as a hermetic seal.

The riser 3, the closed chute 7 and the housing 8 constitute a system closed from the atmosphere and having a hermetic closure 12 in the part not filled with water or pulp, with which is connected an exhaust pump 13.

When the device is put into operation, the housing 8, the chute 7 and the riser 3 are exhausted by means of the exhaust pump 13, the water thus rising in the riser 3 to a height $h$ of about 10 m. After the rotor 9 is actuated, the products to be rasped can be supplied through the conduit 1, the elevator and the chute 7 for being rasped in an oxygen-free manner into a gas-free pulp not exposed to oxidation. This pulp is conducted away by means of the pump 11 for being further processed.

Fig. 2 shows a device for rasping agricultural products in a protective gas atmosphere. The products are supplied to an oxygen-barring sluice in the form of a water trap 14 constituted by a reservoir 15, which communicates on the bottom side with an upwardly inclined pipe 16, in which a worm conveyor 17 is arranged with an amount of clearance. The worm conveyor 17 can conduct the products from the water-filled reservoir 15 upwards through the pipe 16 without carrying along an appreciable amount of water.

The worm conveyor 17 terminates at a connection of the pipe 16 with a downwardly extending feeding pipe 18 leading to a rasping device 19, whose housing 20 is closed in a gastight manner, apart from the supply pipe 18, a gas supply conduit 21 and a pulp delivery conduit 23 including a pump 22.

The pipe 16, the downwardly extending feeding pipe 18, the housing 20, the delivery conduit 23 and the pump 22 interconnected in a gastight manner so that after the supply of a protective gas from a stock vessel 24 or a generator of protective gas in a rasping device a protective gas atmosphere can be maintained. The penetration of oxygen is prevented by the water trap 14 in the feeding device and the pump 22 in the delivery device.

If the gases absorbed in the pulp during rasping are disturbing the further processing of the pulp, a gas separator 25 can be arranged in the delivery conduit 23 downstream the pump.

This embodiment is illustrated in fig. 3. The pulp from which the gas separator has extracted the gas is conducted away through a conduit 26 and the gas is fed back through a return conduit 27 with the blower 28 to the rasping device so that the protective gas is recycled.

Fig. 3 shows moreover, a conventional rasping device 29. In order to adapt the same to the method in accordance with the invention it is arranged in a separate gastight housing 30. In this housing opens out a feeding device 14 to 17 as described with reference to fig. 2 and the products to be rasped out are shed into a filling funnel 31 of the rasping equipment 29. The pulp formed by the rasping device is conducted away from a pulp collecting trough 32 via the outlet conduit 23 including a pump 22.

Although in the foregoing rasping devices are

described, it is a matter of course, that grinding devices such as hammer mills, beater mills, tine-disc crushers may be used. The choice thereof will usually depend upon the products to be worked and the aftertreatment thereof.

In the embodiment shown in fig. 1 a hermetic closing member may be used as a variant comprising a riser of 10 m high, in the bottom end of which opens out a feeding conduit for the products to be ground or rasped. The riser is provided with a conventional pump for pumping up a mixture of water and products to be ground, for example, potatoes so that at the top of the riser the mixture slightly exceeds the manometric height of the rise. The mixture flows over into an outlet gutter with a perforated bottom. The outlet gutter leads to the grinding or rasping device and beneath the perforated bottom a collecting trough is arranged and connected on the bottom side with a delivery conduit leading downwards to the bottom side of the riser. In this way the water is pumped around.

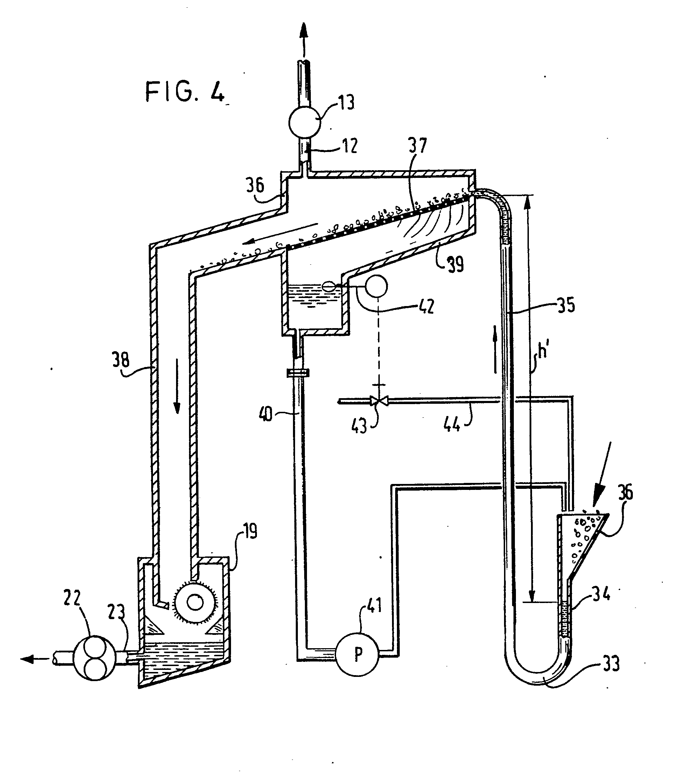

Fig. 4 is a schematic, vertical sectional view of a preferred vacuum rasping device. A U-shaped pipe 33 having a short limb 34 and a long limb 35 is filled with water; Into the short limb 34, which is open at the top end and which is provided with a feeding funnel 36, are introduced the products to be ground. Since the vertical distance h' between the water level in the short limb and the top side of the long limb is smaller than the hydrostatic height, which corresponds to the vacuum in the rasping device, the water in the U-shaped pipe will flow towards the top end of the long limb 34 and carry along the products to be rasped.

The mixture of products to be ground and water flows from the long limb 35 into a separation chamber 36 having an inclined sieve bottom 37 allowing only water to pass, which communicates with a delivery conduit 38 for passing the products to the vacuum grinding or rasping device 19.

In the hermetically closed grinding or rasping device the products are ground or rasped to a pump, which is conducted away through an outlet conduit 23 including a pump 22.

The water of the mixture flows through the sieve bottom 37 into a collecting trough 39 having a down-comer 40 in which a pump 41, for example, a centrifugal pump is arranged for pumping the fluid back to the short limb 34 of the U-shaped pipe 33.

Beneath the sieve bottom 37 is arranged a scanner 42, which is adjustable in a direction of height, for example, a float for monitoring the fluid level, said scanner being coupled with a closing member 43 in a fluid feeding conduit 44 opening out in the short limb 34.

By exhausting the system during the start with the aid of an exhaust pump 13 for the vacuum connection 12, the water rises in the long limb 35 and drops in the short limb 34 until the water flows over at the top of the long limb to the separation chamber 36, from where it flows through the sieve bottom 37 via the collecting trough 39 through a down-comer 40. In this down-comer the fluid level is kept lower by the pump 41 that in the long limb 35. The water pumped down through the down-comer is conducted away into the open short limb 34 of the U-shaped pipe.

## Claims

1. A method of grinding or rasping tubers, roots, fruit and similar agricultural produce to pulp characterized in that the products, the spaces between which are not filled with liquid, are ground or rasped in environments free of oxygen or of poor oxygen content.

2. A method as claimed in claim 1 characterized in that grinding or rasping is performed in vacuo.

3. A method as claimed in claim 1 characterized in that grinding or rasping is performed in an inert gas atmosphere.

4. A method as claimed in claim 1 characterized in that grinding or rasping is performed in a reducing gas atmosphere.

5. A method as claimed in claim 3 or 4 characterized in that the gas conducted away with the ground product is separated from the pulp and the gas is fed back to the space where grinding or rasping is carried out.

6. A device for carrying out the method claimed in claim 1 comprising a grinding or rasping equipment (6, 29, 19), a feeding device (2, 17, 38) for the products to be ground or rasped and a delivery device (10, 23, 26) for the ground pulp characterized in that the grinding or rasping equipment (6, 29, 19) is provided with a gastight housing (8, 20, 30) through the walls of which are passed the conduits of the feeding and delivery devices and in that the feeding device is provided with an oxygen-barring sluice (3;14, 15;33).

7. A device as claimed in claim 6, characterized in that the housing is resistant to internal vacuums, in that the feeding and delivery devices are provided with vacuum sluices and in that the housing is provided with a vacuum connection (12, 13).

8. A device as claimed in claim 6 or 7 characterized in that the feeding device is provided with a fluid trap (3, 14, 35) having transport means (4, 17, 35) for passing through it products to be ground up to above the grinding or rasping device.

9. A device as claimed in claim 8, characterized in that the fluid trap is provided with a water-filled riser (3) having a height of about 10 metres.

10. A device as claimed in claim 8 or 9, characterized in that the feeding device is provided with a U-shaped pipe (33) having a short limb (34) and a long limb (35), the long limb (35), which corresponds to the hydrostatic height, opening out in a separation chamber (36) having a inclined sieve bottom (37) allowing only fluid to pass and communicating with an outlet conduit (38) leading to the grinding or rasping device (19), beneath which chamber is arranged a fluid collecting trough (39), provided with a down-comer (40) including a pump (41), said down-comer (40) opening out in the open short limb (34) of the U-shaped pipe (33).

11. A device as claimed in claim 10, characterized in that the down-comer (40) opens out near the open end of the short limb (34).

12. A device as claimed in claim 10, characterized in that beneath the fluid sieve bottom (37) a permeable scanner (42) adjustable in a direction of height is arranged for monitoring the fluid level, said scanner (42) being coupled with a closing member (43) in a fluid supply conduit (44) opening out in the fluid trap.

13. A device as claimed in claim 12 characterized in that the fluid supply conduit (44) opens out near the open end of the short limb (34).

14. A device as claimed in claim 9, characterized in that an elevator (4) is arranged in the riser (3).

15. A device as claimed in claim 14, characterized in that the elevator (4) is provided with perforated scoops (5).

16. A device as claimed in claim 9, characterized in that the riser (3) comprises a pump for transporting a mixture of solids and fluid and in that the riser delivers it to a downwardly inclined, apertured chute, beneath which a collecting trough is arranged, an outlet of which is connected with the lower side of the riser.

17. A device as claimed in claim 6, characterized in that the housing (20) is provided with a feeding conduit (21) for an inert or a reducing gas.

18. A device as claimed in claim 17, characterized in that the feeding conduit is connected with a gas separator (25) arranged in the delivery device.

19. A device as claimed in claim 8 or 9, characterized in that the fluid trap includes a pump for pumping a mixture of water and products to be ground.

## Revendications

1. Procédé pour broyer ou râper des turbercules, raçines, fruits et autres agricoles similaires en pâte caractérisé en ce que les produits, entre lesquels les espaces ne sont pas remplis de liquide, sont broyés ou râpés dans des environnements dépourvus d'oxygène ou pauvres en oxygène.

2. Procédé selon la revendication 1, caractérisé en ce que le broyage ou le râpage sont exécutés sous vide.

3. Procédé selon la revendication 1, caractérisé en ce que le broyage ou le râpage sont exécutés sous atmosphère de gaz inerte.

4. Procédé selon la revendication 1, caractérisé en ce que le broyage ou le râpage sont exécutés sous atmosphère de gaz réducteur.

5. Procédé selon les revendications 3 ou 4, caractérisé en ce que le gaz évacué avec le produit broyé est séparé de la pâte et le gaz est renvoyé dans l'espace ou le broyage ou le râpage sont exécutés.

6. Dispositif pour la mise en oeuvre du procédé revendiqué suivant la revendication 1, caractérisé en ce qu'il comprend un appareil de broyage ou de râpage (6, 19, 29), un dispositif d'alimentation (2, 17, 38) pour les produits à broyer ou à râper et un dispositif de distribution (10, 23, 26) pour la pâte broyée, caractérisée en ce que l'appareil de broyage où de râpage (6, 19, 29) est pourvu d'une enveloppe (8, 20, 30) étanche au gaz à travers les parois duquel sont passés les conduits des dispositifs d'alimentation et de distribution, et en ce que le dispositif d'alimentation est muni d'une bonde liquide (3; 14, 15; 33) formant barrage pour l'oxygène.

7. Dispositif selon la revendication 6, caractérisé en ce que l'enveloppe est résistante aux dépressions intérieures, en ce que les dispositifs d'alimentation et de distribution sont pourvus de bondes liquides pour la dépression et en ce que l'enveloppe est pourvue d'un raccord de dépression (12, 13).

8. Dispositif selon les revendication 6 ou 7, caractérisé en ce que le dispositif d'alimentation est pourvu d'un piège à fluide (3, 14, 35) ayant des moyens de transport (4, 17, 35) pour faire passer les produits à broyer à travers ce piège et les faire monter au-dessus du dispositif de broyage ou de râpage.

9. Dispositif selon la revendication 8, caractérisé en ce que le piège à fluide est pourvu d'une colonne montante (3) remplie d'eau ayant une hauteur d'environ 10 mètres.

10. Dispositif selon les revendications 8 ou 9, caractérisé en ce que le dispositif d'alimentation est muni d'un tube en U (33) ayant une courte branche (34) et une longue branche (35), la longue branche (35), qui correspond à la hauteur hydrostatique, s'ouvrant dans une chambre de séparation (36) ayant un fond incliné (37) constitué d'un tamis permettant seulement le passage du fluide et communiquant avec un conduit de sortie (38) conduisant au dispositif de broyage ou de râpage (19), chambre au-dessous de laquelle est disposé un bac (39) collecteur de fluide, pourvu d'un tuyau de descente (40) comportant une pompe (41), ledit tuyau de descente (40) s'ouvrant sur la courte branche ouverte (34) du tube en U. (33).

11. Dispositif selon la revendication 10, caractérisé en ce que le tuyau de descente (40) s'ouvre près de l'extrémité ouverte de la courte brance (34)

12. Dispositif selon la revendication 10, caractérisé en ce que au-dessous du fond en tamis (37) perméable au fluide est disposée une jauge (42) qui est réglable dans le sens de la hauteur pour contrôler le niveau du fluide, ladite jauge (42) étant couplée avec un organe de fermeture (43) dans un conduit (44) d'alimentation en fluide s'ouvrant sur le piège à fluide.

13. Dispositif selon la revendication 12, caracd-térisé en ce que le conduit (44) d'alimentation de fluide débouche près de l'extrémité ouverte de la courte branche (34).

14. Dispositif selon la revendication 9, caractérisé en ce que un élévateur (4) est disposé dans la colonne montante (3).

15. Dispositif selon la revendication 14, caractérisé en ce que l'élévateur (4) est pourvu de godets perforés (5).

16. Dispositif selon la revendication 9, caractérisé en ce que la colonne montante (3) comprend une pompe pour transporter un mélange de solides et de fluide, et en ce que la colonne montante distribue ce mélange dans un goulotte ouverte inclinée vers le bas, endessous de laquelle est disposé un bac collecteur, dont un orifice de sortie est raccordé au côté inférieur de la colonne montante.

17. Dispositif selon le revendication 6, caractérisé en ce que l'enveloppe (20) est munie d'un conduit d'alimentation (21) pour un gaz inerte ou réducteur.

18. Dispositif selon la revendication 17, caractérisé en ce que le conduit d'alimentation est raccordé à un séparateur de gaz (25) disposé dans le dispositif de distribution.

19. Dispositif selon les revendications 8 ou 9, caractérisé en ce que le piège à fluide comprend une pompe pour pomper un mélange d'eau et de produits à broyer.

**Patentansprüche**

1. Verfahren zum Mahlen oder Raspeln von Knollen, Wurzeln, Früchten und ähnlichen landwirtschaftlichen Produkten zu einer breiigen Masse, dadurch gekennzeichnet, daß die Produkte, zwischen denen vorhandene Zwischenräume nicht mit Flüssigkeit gefüllt sind, in sauerstofffreien oder in an Sauerstoffgehalt armen Umgebungen gemahlen oder geraspelt werden.

2. Verfahren nach Anspruch 1, dadurch gekennzeichnet, daß das Mahlen oder Raspeln in Vakuum durchgeführt wird.

3. Verfahren nach Anspruch 1, dadurch gekennzeichnet, daß das Mahlen oder Raspeln in einer Schutzgasatmosphäre durchgeführt wird.

4. Verfahren nach Anspruch 1, dadurch gekennzeichnet, daß das Mahlen oder Raspeln in einer Reduziergasatmosphäre durchgeführt wird.

5. Verfahren nach Anspruch 3 oder 4, dadurch gekennzeichnet, daß das mit dem gemahlenen Produkt weggeleitete Gas aus der breiigen Masse abgesondert wird und daß das Gas in den Raum zurückgeführt wird, in welchem das Mahlen oder Raspeln durchgeführt wird.

6. Vorrichtung zur Durchführung des Verfahrens nach Anspruch 1, mit einer Mahl- oder Raspeleinrichtung (6, 29, 19), einer Zuführrichtung (2, 17, 38) für die zu mahlenden oder zu raspelnden Produkte und mit einer Abgabeeinrichtung (10, 23, 26) für die gemahlene breiige Masse, dadurch gekennzeichnet, daß die Mahloder Raspeleinrichtung (6, 29, 19) mit einem gasdichten Gehäuse (8, 20, 30) versehen ist, durch dessen Wände die Rohrleitungen der Zuführ- und Abführeinrichtungen hindurch verlaufen, und daß die Zuführeinrichtung mit einem Sauerstoff-Absperrglied (3;14, 15;33) versehen ist.

7. Vorrichtung nach Anspruch 6, dadurch gekennzeichnet, daß das Gehäuse für Innen-Unterdrucke beständig ist, daß die Zuführ- und Abführeinrichtungen mit Unterdruck-Absperrgliedern versehen sind und daß das Gehäuse mit einer Unterdruck-Verbindung (12, 13) versehen ist.

8. Vorrichtung nach Anspruch 6 oder 7, dadurch gekennzeichnet, daß die Zuführeinrichtung mit einem FluidAbscheider (3, 14, 35) versehen ist, der eine Transporteinrichtung (4, 17, 35) aufweist, mit deren Hilfe zu mahlende Produkte oberhalb der Mahl- oder Raspeleinrichtung hingeleitet werden.

9. Vorrichtung nach Anspruch 8, dadurch gekennzeichnet, daß der Fluid-Abscheider mit einem wassergefüllten Steigrohr (3) versehen ist, welches eine Höhe von etwa 10 m aufweist.

10. Vorrichtung nach Anspruch 8 oder 9, dadurch gekennzeichnet, daß die Zuführeinrichtung mit einem U-förmigen Rohr (33) versehen ist, welches einen kurzen Teil (34) und einen langen Teil (35) aufweist, daß der lange Teil (35), welcher der hydrostatischen Höhe entspricht, zu einer Abscheidekammer (37) hin offen ist, die einen geneigten Siebboden (37) aufweist, der lediglich einem Fluid den Durchtritt ermöglicht und mit einem Auslaßrohr (38) in Verbindung steht, welches zu der Mahl- oder Raspeleinrichtung (19) hinführt, wobei unterhalb der Kammer ein Fluidsammelbehälter (39) angeordnet ist, der mit einem Fallrohr (40) versehen ist, welches eine Pumpe enthält und welches zu dem offenen kurzen Teil (34) des U-förmigen Rohres (33) hin offen ist.

11. Vorrichtung nach Anspruch 10, dadurch gekennzeichnet, daß das Fallrohr (40) nahe des offenen Endes der kurzen Teiles (34) nach außen hin offen ist.

12. Vorrichtung nach Anspruch 10, dadurch gekennzeichnet, daß unterhalb des Fluid-Siebbodens (37) ein durchlässiger Abtaster (42) vorgesehen ist, der in einer Höhenrichtung einstellbar ist und mit dessen Hilfe der Fluidpegel überwacht wird, und daß der Abtaster (42) mit einem Verschließteil (43) in einem Fluidabgaberohr (44) gekoppelt ist, welches zu dem Fluidabscheider hin offen ist.

13. Vorrichtung nach Anspruch 12, dadurch gekennzeichnet, daß das Fluidabgaberohr (44) nahe des offenen Endes des kurzen Teiles (34) offen ist.

14. Vorrichtung nach Anspruch 9, dadurch gekennzeichnet, daß in dem Steigrohr (3) ein Förderer (4) angeordnet ist.

15. Vorrichtung nach Anspruch 14, dadurch gekennzeichnet, daß der Förderer (4) mit perforierten Schaufeln (5) versehen ist.

16. Vorrichtung nach Anspruch 9, dadurch gekennzeichnet, daß das Steigrohr (3) eine Pumpe aufweist, mit deren Hilfe ein Gemisch aus Feststoffen und Fluid transportiert wird, und daß das Steigrohr das betreffende Gemisch an eine nach unten geneigte perforierte Rinne abgibt, unterhalb der ein Sammelbehälter angeordnet ist, welcher mit einem Auslaß mit der unteren Seite des Steigrohres verbunden ist.

17. Vorrichtung nach Anspruch 6, dadurch gekennzeichnet, daß das Gehäuse (20) mit einem Zufürrohr (21) für ein Schutzgas oder für ein Reduktionsgas versehen ist.

18. Vorrichtung nach Anspruch 17, dadurch gekennzeichnet, daß das Zuführrohr mit einem Gasabscheider (25) verbunden ist, der in der Abgabeeinrichtung angeordnet ist.

19. Vorrichtung nach Anspruch 8 oder 9, dadurch gekennzeichnet, daß der Fluidabscheider eine Pumpe enthält, mit der ein Gemisch aus Wasser und zu mahlenden Produkten gepumpt wird.

0 025 627

FIG. 1

FIG. 2

FIG. 3

FIG. 4